# EUROPEAN PATENT SPECIFICATION

(11) **EP 2 756 018 B1**
(45) Date of publication and mention of the grant of the patent: **21.10.2015**
(21) Application number: 12759421.6
(22) Date of filing: 13.09.2012
(51) Int. Cl.: C08F 265/00, C08F 265/04

(54) **METHOD FOR THE CONTINUOUS PRODUCTION OF AN AQUEOUS POLY(METH)ACRYLATE RESIN DISPERSION**
VERFAHREN ZUR DURCHGEHENDEN HERSTELLUNG EINER WÄSSRIGEN POLY(METH)ACRYLATHARZDISPERSION
PROCÉDÉ DE PRODUCTION CONTINUE D'UNE DISPERSION AQUEUSE DE RÉSINE DE POLY(MÉTH)ACRYLATE

(30) Priority: 15.09.2011 EP 11181403
(43) Date of publication of application: 23.07.2014
(73) Proprietor: Bayer Intellectual Property GmbH, 40789 Monheim (DE)
(72) Inventor: AVTOMONOV, Evgeny, 201702 Shangai (CN); HENNINGER, Björn, 22145 Hamburg (DE); RUHLAND, Matthias, 51375 Leverkusen (DE); WITKOWSKI, Reiner, 46242 Bottrop (DE); STEIN, Sigrun, 51375 Leverkusen (DE); BACH, Sven, 40764 Langenfeld (DE); BOOS, Karl-Robert, 51399 Burscheid (DE)
(74) Representative: BIP Patents
(86) International application number: PCT/EP2012/067900
(87) International publication number: WO 2013/037863

(56) References cited:
- EP-A2- 0 303 518
- US-A1- 2011 104 609

## Description

The present invention relates to a method for the continuous production of an aqueous poly(meth)acrylate resin dispersion comprising the steps of: I) providing a (meth)acrylate polymer and/or a (meth)acrylate copolymer; II) adding a neutralizing agent; III) adding water; and IV) mixing the composition to yield a dispersion.

It is known from a wide number of publications and patents to use dispersions based on (co)polymerisates of vinylic, radically (co)polymerizable monomers as binders in water-dilutable coatings. Such dispersions are prepared in the art from copolymers or mixtures of copolymers, for example (meth)acrylic esters, and further addition of hydroxyfunctional monomers, acid-functional monomers and optionally other monomers and molecular weight regulators.

The preparation of such copolymers or copolymer mixtures in the art is undertaken by free radical polymerization in, for example, a batch process. Optionally, the batch reactor may already be charged with polymers and/or further reactions may take place in the finished reaction mixture. The reaction may be conducted in substance (in bulk), meaning in the absence of diluting and radically non-reactive substances, in the presence of solvents or as an emulsion polymerization, meaning directly in water. Copolymers or copolymer mixtures thus obtained (generally referred to as 'resin') typically have an acid group content in mmol per 100 g solid polymer of 0.1 to 200 mmol.

For the production and the use of such (meth)acrylate polymers in two-component polyurethane coatings reference is made to EP-A 0 947 557, EP-A 1 510 561, DE-A 10 2004 054447, EP-A 1 657 270, EP-A 1 702 954, EP-A 1 862 485, EP-A 2 025 690, EP-A 0 358 979, EP-A 0 537 568, EP-A 0 543 228, EP-A 0 758 007, EP-A 0 841 352, EP-A 1 141 065, EP-A 1 024 184 and DE-A 4 439 669.

Furthermore, the resin typically has a number averaged molecular weight of 500 to 50000 g/mol and is provided in the form of a highly viscous melt or a solution. The viscosity is a function of temperature and shear rate and normally is in a range of 1 Pa s and 1000 Pa s at shear rates from 40/s to 100/s.

After the manufacture of the copolymers or copolymer mixtures in substance or in the presence of solvents it is necessary to prepare the desired aqueous dispersion in a separate process step. As it is described in the state of the art (e. g. EP-A 947 557, DE-A 4 439 669 or EP-A 1 024 184), in a stirred vessel (usually the reaction vessel), batch-wise one or more basic compounds such as organic amines, ammonia or inorganic base solutions are added to the resin. This is generally referred to as the neutralization step. Then water is added to the neutralized resin and mixed with it or sometimes the neutralized resin is added to water and mixed with the water. This is generally referred to as the emulsifying or dispersing step. A part of the resin may also transfer to the aqueous solution.

The polymer particles within the emulsion may solidify during cooling. Particles should have a mean size of less than 300 nm, which may be determined by way of the weight average. Then water-dilutable coatings can be produced with good optical properties such as a high gloss and furthermore good storage stability.

It is known in the art that the mixing of highly viscous fluids with low viscosity fluids in stirring vessels is especially difficult and requires long stirring times and high shear rates. Because of this the neutralization step and the emulsifying step take several minutes to hours, which negatively impacts the economy of the process. Constantly rising economic requirements put forward to the production of aqueous binders cannot be met by such a process. In particular, an increase of the throughput at a given process plant size without large investments (raising the space-time yield) cannot be achieved with conventional methods.

The present invention has the object of addressing the afore-mentioned drawbacks in the art. In particular, the invention has the object of providing a method for the efficient production of aqueous dispersions comprising a poly(meth)acrylate resin without the need for widespread investments in the process plant and with a high space-time yield.

This object is achieved in the present invention by a method for the production of an aqueous poly(meth)acrylate resin dispersion, comprising the steps of:
I) providing a (meth)acrylate polymer and/or a (meth)acrylate copolymer with an acid group content of ≥ 0.1 mmol to ≤ 200 mmol per 100 g of polymer at a temperature of ≥ 50 °C to ≤ 170 °C;
II) adding a neutralizing agent to the (meth)acrylate polymer and/or (meth)acrylate copolymer to yield an at least partially neutralized (meth)acrylate polymer and/or (meth)acrylate copolymer;
III) adding water to the at least partially neutralized (meth)acrylate polymer and/or (meth)acrylate copolymer to yield a composition comprising the at least partially neutralized (meth)acrylate polymer and/or (meth)acrylate copolymer and water;
IV) mixing the composition of step III) to yield a dispersion of particles of the at least partially neutralized (meth)acrylate polymer and/or (meth)acrylate copolymer in water.

The method is characterized in that at least step III) is conducted as a continuous step.

In the method according to the invention aqueous polymer dispersions may be obtained with a solids content of, for example, 25 weight-% to 65 weight-%. The degree of neutralization, defined as the molar ratio of added basic neutralizing agent to the acid groups present in the resin, may be in a range of 30% to 130%.

Continuous steps or processes in the sense of the invention are in particular those in which an incoming stream enters an element of a reaction apparatus (such as a reactor or mixer) to be converted or to be processed and exits as an outgoing stream simultaneously but at separate locations. This is opposed to the case of discontinuous processes where the process steps of feeding the components, carrying out process steps and discharging the products take place in temporal succession. Preferably, in a continuous process the run-time of the process and the time in which the products are in the process plant are in a ratio of at least 50:1.

Suitable monomers which may be employed in the synthesis of the (meth)acrylate polymers and/or copolymers include aromatic monomers such as styrene, α-methyl styrene or vinyl toluene; aliphatic esters of acrylic and/or methacrylic acid with 1 to 18 C-atoms such as methyl acrlylate, ethyl acrylate, n-butyl acrylate, iso-butyl acrylate, n-hexyl acrylate, 2-ethylhexyl acrylate, methyl methacrylate, ethyl methacrylate, n-butyl methacrylate, stearyl methacrylate; cycloaliphatic esters of acrylic and/or methacrylic acid with 1 to 12 C-atoms in the alcohol component such as cyclohexyl methacrylate, isobornyl acrylate, isobornyl methacrylate; reaction products of hydroxyalkyl esters of acrylic and/or methacrylic acid with 2 to 4 C-atoms in the hydroxyalkyl rest with ε-caprolactone; α,β-monoolefinically unsaturated mono- or dicarboxylic acids with 3 to 7 C-atoms such as acrylic and/or methacrylic acid, and/or at least one hemiester of maleic or fumaric acid with 1 to 14 C-atoms in the alcohol rest such as maleic acid monoethyl ester, maleic acid monobutyl ester; further monomers such as acrylonitrile, methacrylonitrile, maleic acid anhydride, vinyl esters of aliphatic, optionally branched monocarboxylic acids with 1 to 10 C-atoms in the alcohol rest. This exemplary listing is not to be understood as limiting. It is also possible to use further unsaturated monomers as comonomers, cooligomers and even polymers with unsaturated groups. The terms '(meth)acrylate' and '(meth)acrylic' mean the possibility of both acrylate and methacrylate derivatives. It is preferred, but not limited to, to use (meth)acrylate copolymers with hydroxyl-group containing comonomers, these comonomers including hydroxyalkyl esters of acrylic and/or methacrylic acid with 2 to 4 C-atoms in the hydroxyalkyl rest such as hydroxyethyl acrylate, hydroxypropyl acrylate, hydroxybutyl acrylate, hydroxyethyl methacrylate and hydroxypropyl methacrylate.

The preparation of the (meth)acrylate polymers and copolymers is known to a person skilled in the art and may be via radical polymerization in substance (in bulk), in solution or in suspension, continuously or batch-wise.

The hydroxyl group content, expressed as mmol OH groups per 100 g of resin, may be calculated from the amount of OH group-containing monomers. Analytic methods include ¹H-NMR spectroscopy or IR spectroscopy. Titration to determine the OH number according to DIN ISO 4269 is also possible. Preferred OH group contents are ≥ 5 mmol to ≤ 600 mmol per 100 g of polymer, more preferred ≥ 30 mmol to ≤ 400 mmol per 100 g of polymer, most preferred ≥ 50 mmol to ≤ 350 mmol per 100 g of polymer.

The acid group content may preferably be calculated using the acid number determined according to DIN EN ISO 2114. It is further possible to determine the acid number spectroscopically, such as via ¹H-NMR spectroscopy or IR spectroscopy. Preferred acid group contents are ≥ 0.1 mmol to ≤ 100 mmol per 100 g of polymer, more preferred ≥ 10 mmol to ≤ 50 mmol per 100 g of polymer.

The mean particle size in the dispersions obtained by the method according to the invention and determined by ultracentrifugation may have a d50 value of ≥ 10 nm to ≤ 300 nm and preferably ≥ 15 nm to ≤ 250 nm. The d50 value is the value at which 50 weight-% of all particles are above this value and 50 weight-% of all particles are below. Ultracentrifugation methods are described in: W. Scholtan, H. Lange, Kolloid-Z. u. Z. Polymere 250 (1972) 782 and in H.G. Müller, Colloid Polym Sci 267 (1989) 1113*.*

Finally, the polymers employed may have a number averaged molecular weight Mₙ (determined at 23°C by Size Excluding Chromatography using polystyrene standard for calibration and tetrahydrofurane as eluent) of 500 to 50000 g/mol, preferably 1000 to 40000 g/mol and more preferred 2000 to 30000 g/mol.

Polymers provided in the initial step of the method according to the invention may be dissolved in solvents such as, but not limited to, butyl glycol, solvent naphtha and/or propylene glycol-n-butyl ether. The temperature range of ≥ 50 °C to ≤ 170 °C provides for a melting, dissolution and adequately processible viscosity of the polymer. Preferred are temperatures of ≥ 80 °C to ≤ 120 °C.

The neutralization step may be conducted using mixing units such as extruders, static mixers, spike mixers, nozzle jet dispersers, rotors and stators or under the influence of ultrasound. Residence time in the mixing units may be, for example, from ≥ 10 seconds to ≤ 20 minutes, preferably from ≥ 30 seconds to ≤ 12 minutes and more preferred from ≥ 60 seconds to ≤ 3 minutes. The ratio of length to diameter in the static mixer during this step may be in a range of ≥ 1:5 to ≤ 1:100, preferably ≥ 1:10 to ≤ 1:50 and more preferred ≥ 1:15 to ≤ 1:30. Neutralizing agents may be bases such as, for example, amines.

The continuous emulsifying or dispersion may also be performed using mixing units such as extruders, static mixers, spike mixers, nozzle jet dispersers, rotors and stators or under the influence of ultrasound. Residence time in the mixing units may be, for example, from ≥ 10 seconds to ≤ 20 minutes, preferably from ≥ 30 seconds to ≤ 12 minutes and more preferred from ≥ 60 seconds to ≤ 3 minutes. The ratio of length to diameter in the static mixer during this step may be in a range of ≥ 1:5 to ≤ 1:100, preferably ≥ 1:10 to ≤ 1:50 and more preferred ≥ 1:15 to ≤ 1:30.

Further preferred embodiments and other aspects of the present invention are described below. They can be combined freely unless the context clearly indicates otherwise.

Of course, all the other steps may be continuous steps. In one embodiment of the method according to the invention steps I), II), III) and IV) are conducted as continuous steps.

In another embodiment of the method according to the invention in step II) the (meth)acrylate polymer and/or (meth)acrylate copolymer are neutralized to a degree of ≥ 30% to ≤ 130%. As already outlined, the degree of neutralization is to be understood as the molar ratio of added basic neutralizing agent to the acid groups present in the resin. For example, a degree of neutralization of 110% would correspond to a ratio of 1.1 molar equivalents of basic component such as amines to 1 mol of acid groups. A preferred degree of neutralization is ≥ 50% to ≤ 120%.

In another embodiment of the method according to the invention the neutralizing agent in step II) comprises an organic amine. Preferred are trialkylamines and most preferred are triethanolamine, dimethylethanolamine and combinations thereof.

In another embodiment of the method according to the invention a (meth)acrylate copolymer is used which is a copolymer obtainable from at least one alkyl methacrylate, at least one hydroxyalkyl (meth)acrylate, at least one alkyl acrylate, and at least one (meth)acrylic acid, and optionally styrene. Particularly preferred is a combination of at least two comonomers selected from methyl methacrylate, hydroxyethyl methacrylate, butyl (meth)acrylate, isobornyl (meth)acrylate, cyclohexyl (meth)acrylate, styrene and (meth)acrylic acid.

In another embodiment of the method according to the invention in step I) the acid group content of the (meth)acrylate copolymer is ≥ 0.1 mmol to ≤ 10 mmol per 100 g of polymer and the (meth)acrylate copolymer is produced using vinylic comonomers comprising substituents with polyoxyalkylene units (-CH₂-CH(R¹)-O-)ₘ, R¹ denoting H or alkyl and m having a value of ≥ 4 to ≤ 60.

The aforementioned alkyl can preferably contain 1-30 carbon atoms in the alkyl part and can be unsubstituted or substituted with optionally 1, 2, 3, 4, 5, 6, 7, 8 or 9 substituents selected independently of one another from the group consisting of F, Cl, Br, I, -CN, -NO₂, -OH, - NH₂, -SH, -O(C₁₋₅-alkyl), -S(C₁₋₅-alkyl), -NH(C₁₋₅-alkyl), -N(C₁₋₅-alkyl) (C₁₋₅-alkyl), OCF₃, C₃₋₈-cycloalkyl and -SCF₃.

Preferred are alkyl groups selected from the group consisting of methyl, ethyl, n-propyl, isopropyl, n-butyl, sec-butyl, isobutyl, tert-butyl, n-pentyl, sec-pentyl, neopentyl and n-hexyl, which can optionally be substituted with 1, 2, 3, 4, 5, 6, 7, 8 or 9 substituents selected independently of one another from the group consisting of F, Cl, Br, I, -CN, -NO₂, -OH, -OH₂, -SH, -OCH₃, - O-C₂H₅, -SCH₃, -S-C₂H₅, -OCF₃, -SCF₃, -NH-CH₃, -N(CH₃)₂, -N(C₂H₅)₂ and - N(CH₃)(C₂H₅). More preferred are unsubstituted alkyl groups selected from the group consisting of methyl, ethyl, n-propyl, isopropyl, n-butyl, sec-butyl, isobutyl, tert-butyl, n-pentyl, sec-pentyl, neopentyl and n-hexyl.

Such a low acid group content may, under certain circumstances, not be sufficient to ensure the emulsification of the resin in water. Therefore it is advantageous to incorporate these polyoxyalkylene units into the resin. Preferably, R¹ denotes H or methyl.

In another embodiment of the method according to the invention in step I) the acid group content of the (meth)acrylate copolymer is ≥ 0.1 mmol to ≤ 10 mmol per 100 g of polymer and the (meth)acrylate copolymer is produced using vinylic comonomers comprising substituents with amino groups -NR²R³, wherein R² and R³ denote, independently of each other, H, C₁ to C₃₀ alkyl or C₇ to C₃₇ alkylaryl. These groups may be converted to ammonium groups by reaction with acids in order to improve the emulsification of the resin in water.

Aryl, as referred to in the present invention, is understood as meaning ring systems with at least one aromatic ring but without heteroatoms even in only one of the rings. These aryl is unsubstituted or substituted with 1, 2, 3, 4 or 5 substituents selected from the group consisting of F, CI, Br, I, NH₂, SH, OH, SO₂, oxo, carboxy, amido, cyano, carbamyl, nitro, phenyl, benzyl, -SO₂NH₂, C₁₋₆ alkyl and C₁₋₆-alkoxy. Preferred examples of aryl include but are not restricted to phenyl, naphthyl, fluoranthenyl, fluorenyl, tetralinyl or indanyl or anthracenyl radicals, which are unsubstituted or substituted.

Alkylaryl, as defined in the present invention, comprises a linear or branched, unsubstituted or substituted alkyl which is bonded to an aryl group, as defined above. A preferred alkylaryl is a benzyl group, wherein the alkyl chain is linear or branched and unsubstituted or substituted with 1, 2, 3, 4 or 5 substituents selected from the group consisting of F, Cl, Br, I, NH₂, SH, OH, SO₂, CF₃, carboxy, amido, cyano, carbamyl, nitro, phenyl, benzyl, -SO₂NH₂, C₁₋₆ alkyl and C₁₋₆-alkoxy.

In another embodiment of the method according to the invention an emulsifier selected from the group consisting of cationic, anionic and/or nonionic emulsifiers is added in one or more of steps I), II), III) and IV). Suitable emulsifiers are known to those skilled in the art and are, for example, listed in Surfactant and Polymers in Aqueous Solution, by K. Holmberg, B. Jönsson, B. Kronberg, B. Lindman, 2.nd Edition, J. Wiley, New York, 2002*,* such as anionic, for example, alkali metal or ammonium salts of long-chain carboxylic acids with 10 to 50 carbon atoms, alkali metal or ammonium alkyl sulfates, alkyl sulfonates, alkylarylsulfonates, sulfosuccinates, cationic, for example long-chain quaternary ammonium ammoniums salts with or without incorporation of ethylene oxide units, non-ionic, for example, polyoxoethylenated long-chain alcohols or alklyphenols or, for example, zwitterionic with both positive and negative charge on the hydrophilic group It is particularly preferred to add the emulsifier if the acid group content of the (meth)acrylate copolymer is ≥ 0.1 mmol to ≤ 10 mmol, as described by the two embodiments above. Anionic and cationic emulsifiers are not compatible with each other, but non-ionic and zwitter-ionic emulsifiers may be used in the mixtures. The typical emulsifier amount based on the resin is within a range of 0.1 weight-% to 5 weight-%.

In another embodiment of the method according to the invention step IV) is performed using a static mixer. Static mixers are known to those in skilled in the art and are, for example, described in Arno Signer, Statisches Mischen in der Kunststoffverarbeitung und -herstellung, Plastverarbeiter 11(43), 1992*.* Particularly preferred are static mixers of the SMX type, which are also known to those skilled in the art and are also mentioned in this publication. The ratio of length to diameter in the static mixer during this step may be in a range of ≥ 1:5 to ≤ 1:100, preferably ≥ 1:10 to ≤ 1:50 and more preferred ≥ 1:15 to ≤ 1:30.

It is known that in a static mixer problems may arise when a low viscosity fluid (liquid, supercritical or gaseous) and a high viscosity fluid are metered separately. In particular with a high volume ratio between a low viscosity fluid and a high viscosity fluid the effect has been observed that bubbles of the low viscosity fluid pass the static mixer with virtually no mixing having occurred. This leads to a reduced efficiency of the static mixer and may lead to a loss of function for the mixer. A special embodiment of the method according to the invention addresses this problem by performing step III) in a continuous manner using a nozzle with an, in radial direction, inner channel through which the water flows and a plurality of, in radial direction, outer channels through which the at least partially neutralized (meth)acrylate polymer and/or (meth)acrylate copolymer flows.

It is preferred that the nozzle is constructed in such a way that to every partial stream of the high viscosity fluid (the at least partially neutralized (meth)acrylate polymer and/or (meth)acrylate copolymer) an additional partial stream of the low viscosity fluid (water) is added.

The nozzle has the effect that the low viscosity fluid is the continuous phase. Then a high surface area is achieved by the individual channels from which the high viscosity fluid exits and a rapid dispersion takes place. Furthermore, the addition of the low viscosity fluid on the side of the channels which are faced towards the exterior side of the pipeline leads to a separation of the high viscosity fluid from the wall of the pipeline. This prevents a prolonged contact with the wall. Because contacting the wall may lead to a chemical degradation of the polymer as evident in the occurrence of discoloring, particle agglomeration or gel formation.

It has surprisingly also been found that the amount of neutralizing agent has a direct influence on the viscosity and the size of particles in the polymer dispersion obtained in the method according to the invention. From conventional stirring batch processes it is known that viscosity and particle size cannot be adjusted over a wide range but rather only small changes in the polymer properties are possible by adding a very specific amount of neutralizing agent. This fact opens a convenient possibility for a new process control and for quality control.

Therefore, in another embodiment of the method according to the invention in the dispersion of step IV) the size of the particles is measured and the amount of neutralizing agent added in step II) is controlled so as to reach a desired particle size. The particle size (mean particle size) may be determined by methods such as laser correlation spectroscopy, dynamic light scattering, ultracentrifugation or acoustic attenuation spectroscopy. It may be necessary to take samples from the product stream. Preferably this is done automatically.

In another embodiment of the method according to the invention the viscosity of the dispersion of step IV) is measured and the amount of neutralizing agent added in step II) is controlled as to reach a desired viscosity. The viscosity may be determined by known methods such as the pressure drop over a capillary or by oscillatory measurements.

The present invention will be further described with reference to the following figures and examples without wishing to be limited by them.

### Examples

FIG. 1 shows the apparatus set up used in Example 1
FIG. 2 shows the apparatus set up used in Example 2
FIG. 3 shows the parameters of the resulting dispersions from Example 2 (viscosity and mean particle size as function of the neutralization degree)
FIG. 4 shows the parameters of the resulting dispersions from Example 3 (viscosity and mean particle size as function of the neutralization degree)

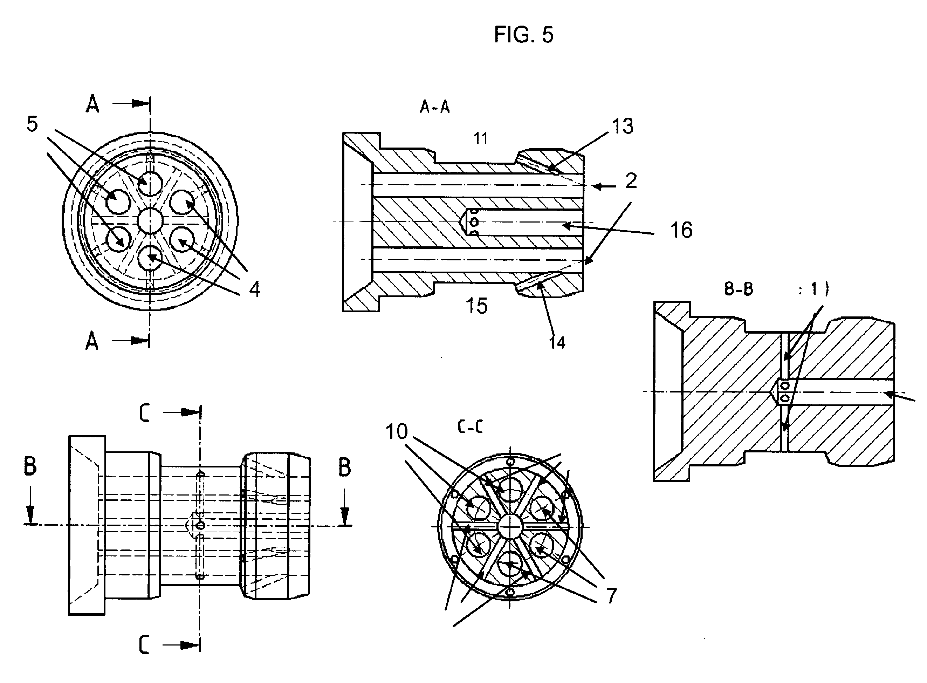

FIG. 5 shows an example of the nozzle design according to the invention

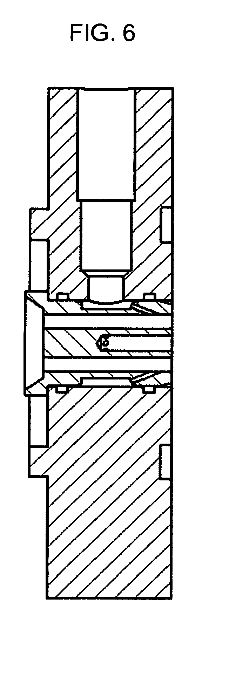

FIG. 6 shows the incorporation of the inventive nozzle into the flange

### Glossary:

Base resin 1: an 85 weight-% solution of a hydroxyl group-containing acrylate resin with a hydroxyl group content of 195 mmol per 100 g of solid resin, an acid group content of 50 mmol per 100 g of solid resin. This resin was prepared according to the Example 1 of EP-A 0947557. Solvent: butyl glycol: solvent naphtha 50:50 weight-%. Base resin 2: an 85 weight-% solution of a hydroxyl group-containing acrylate resin with a hydroxyl group content of 230 mmol per 100 g of solid resin, an acid group content of 50 mmol per 100 g of solid resin. This resin was prepared according to the Example 1 of EP-A 1391469. Solvent: propylene glycol-n-butyl ether (Dowanol^{®} PnB) : solvent naphtha (Solvesso^{®} SN100) 50:50 weight-%. Methods:
Particle size measurements: laser correlation spectroscopy, Malvern® Zetasizer, Z-mean value.
Viscosity measurements: mPa s according to DIN EN ISO 3219/A.3.
Hydroxyl group content: calculated from the OH group-containing acrylate monomers.
Acid group content: calculated using the acid number determined according to DIN EN ISO 2114.
pH value: dilution of the dispersion with deionized water by 1:4; DIN ISO 976.

### Example 1 (emulsifying step):

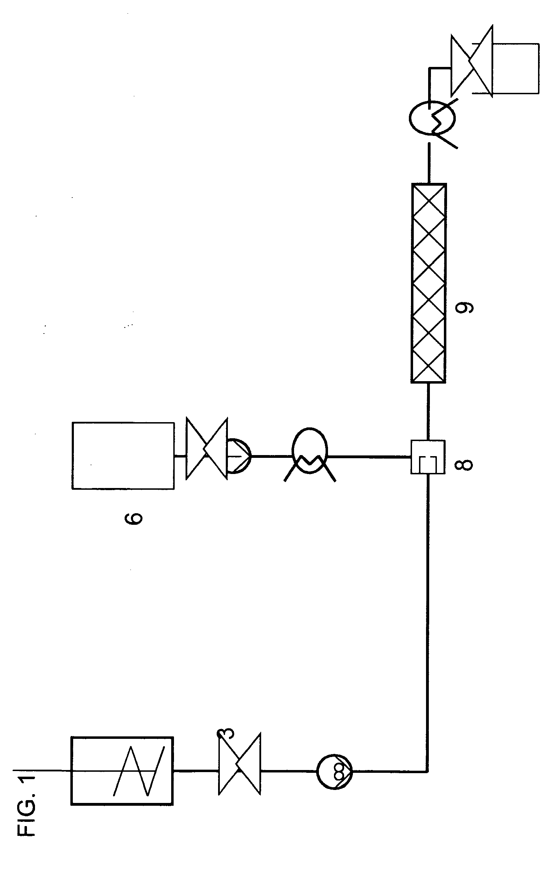

In a reaction system according to FIG. 1 a 10 liter vessel 1 was charged with 7.5 kg of the base resin 1 solution, followed by heating to 90 °C. Over the course of one minute the neutralization agent, 199 g dimethylethanolamine, were added and it was homogenized by stirring for 20 minutes.

Deionized water from vessel 4, which can be connected or disconnected via valve 5, was metered using pump 6, heated to 90 °C in heat exchanger 7 and was contacted with the resin-amine mixture in nozzle 8. The product streams were then dispersed in static mixer 9.

Using heat exchanger 10 the dispersion was cooled and transferred to storage vessel 12 via pressure reducing valve 11.

The static mixer 9 was an SMX mixer with a diameter of 34 mm and a ratio of length to diameter of 20.

The throughput of the resin-amine mixture was 7.7 kg/h and of the water was 7.5 kg/h. The particle size determined was 145 nm and the viscosity 0.83 Pa s.

Residence (dwell) time in the static mixer was 117 seconds.

### Example 2 (neutralization and emulsifying):

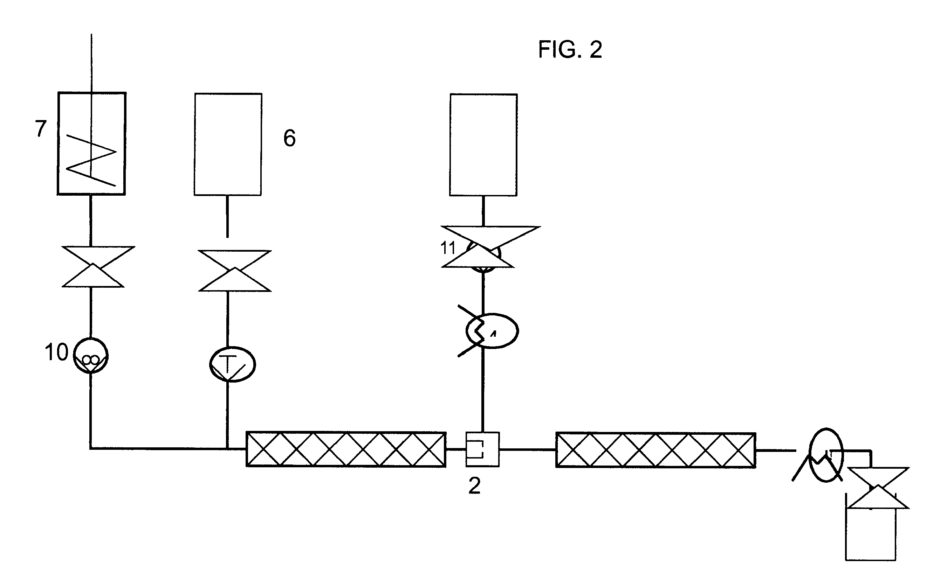

In a reaction system according to FIG. 2 a 10 liter vessel 1 was charged with 7.6 kg of the base resin 1 solution, followed by heating to 90 °C. 7.82 kg/h of the resin solution were metered using pump 3 and mixed with dimethylethanolamine from vessel 13 using pump 15 in static mixer 16.

6.97 kg/h of deionized water from vessel 4, which can be connected or disconnected via valve 5, were metered with pump 6, heated to 90 °C using heat exchanger 7 and contacted with the resin-amine mixture in nozzle 8.

The amine throughput was varied between 188 g/h and 232 g/h. This corresponded to a neutralization degree of 94% to 116%. The product streams were then dispersed in static mixer 9.

Using heat exchanger 10 the dispersion was cooled and transferred to storage vessel 12 via pressure reducing valve 11.

The static mixer 16 was an SMX mixer with a diameter of 22 mm and a ratio of length to diameter of 21. The residence time in the static mixer was 70 s.

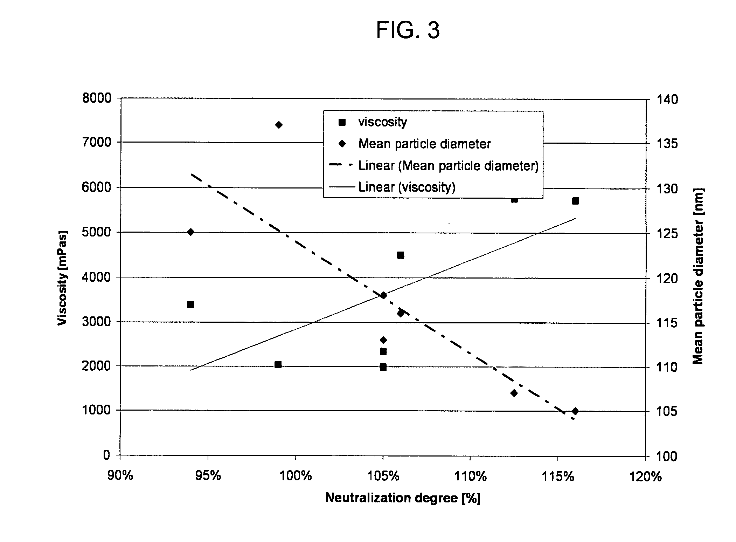

The static mixer 9 was an SMX mixer with a diameter of 27 mm and a ratio of length to diameter of 15. Residence time in the static mixer was 45 seconds. FIG. 3 shows the results obtained according to example 2, where the particle size is given as a function of the neutralization degree. It can be seen that all particle diameters were less than 145 nm, which is a surprising result. It can also be seen that the amine addition has a direct, approximately linear influence on the viscosity and the particle size. This surprising effect may be the basis of a process control concept.

### Example 3 (neutralization and emulsifying):

In a reaction system according to FIG. 2 a 10 liter vessel 1 was charged with 7.3 kg of the base resin 2 solution, followed by heating to 105 °C. 7.74 kg/h resin were metered using pump 3 and combined with a mixture of 75 mass-% triethanolamine and 25 mass-% dimethylethanolamine from vessel 13 using pump 15 in static mixer 16.

6.89 kg/h deionized water from vessel 4, which can be connected or disconnected via valve 5, were metered with pump 6, heated to 70 °C using heat exchanger 7 and contacted with the resin-amine mixture in nozzle 8.

The amine throughput was varied between 354 g/h and 402 g/h. This corresponded to a neutralization degree of 95% to 110%. The product streams were then dispersed in static mixer 9.

Using heat exchanger 10 the dispersion was cooled and transferred to storage vessel 12 via pressure reducing valve 11.

The static mixer 16 was an SMX mixer with a diameter of 22 mm and a ratio of length to diameter of 21. The residence time in the static mixer was 70 s.

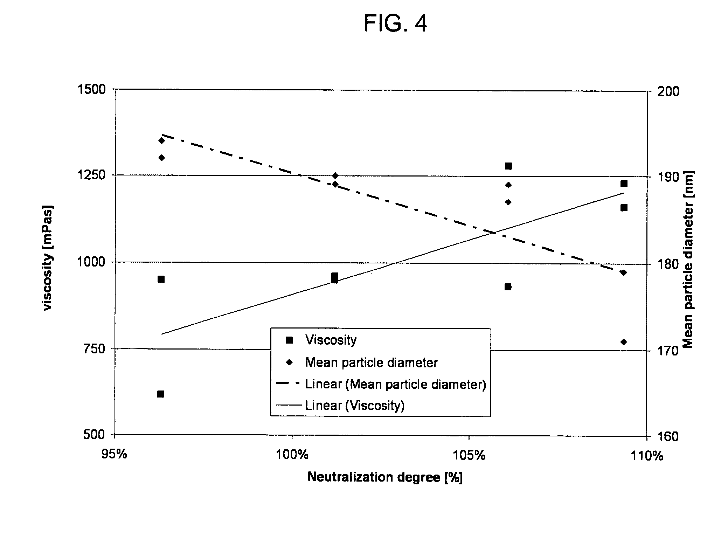

The static mixer 9 was an SMX mixer with a diameter of 27 mm and a ratio of length to diameter of 15. Residence time in the static mixer was 46 seconds. FIG. 4 shows the results obtained according to example 3, where the particle size is given as a function of the neutralization degree. It can be seen that all particle diameters were less than 200 nm, which is a surprising result. It can also be seen that the amine addition has a direct, approximately linear influence on the viscosity and the particle size. This surprising effect may be the basis of a process control concept.

## Claims

1. A method for the production of an aqueous poly(meth)acrylate resin dispersion, comprising the steps of:
I) providing a (meth)acrylate polymer and/or a (meth)acrylate copolymer with an acid group content of ≥ 0.1 mmol to ≤ 200 mmol per 100 g of polymer at a temperature of ≥ 50 °C to ≤ 170 °C;
II) adding a neutralizing agent to the (meth)acrylate polymer and/or (meth)acrylate copolymer to yield an at least partially neutralized (meth)acrylate polymer and/or (meth)acrylate copolymer;
III) adding water to the at least partially neutralized (meth)acrylate polymer and/or (meth)acrylate copolymer to yield a composition comprising the at least partially neutralized (meth)acrylate polymer and/or (meth)acrylate copolymer and water;
IV) mixing the composition of step III) to yield a dispersion of particles of the at least partially neutralized (meth)acrylate polymer and/or (meth)acrylate copolymer in water;
**characterized in that**
at least step III) is conducted as a continuous step.

2. The method according to claim 1, wherein steps I), II), III) and IV) are conducted as continuous steps.

3. The method according to claim 1 or claim 2, wherein step II) the (meth)acrylate polymer and/or (meth)acrylate copolymer are neutralized to a degree of ≥ 30 % to ≤ 130 %.

4. The method according to any of claims 1 to 3, wherein the neutralizing agent in step II) comprises at least one amine.

5. The method according to any of claims 1 to 4, wherein a (meth)acrylate copolymer is used which is a copolymer obtainable from at least one alkyl methacrylate, at least one hydroxyalkyl (meth)acrylate, at least one alkyl acrylate, and at least one (meth)acrylic acid, and optionally styrene.

6. The method according to any of claims 1 to 5, wherein in step I) the acid group content of the (meth)acrylate copolymer is ≥ 0.1 mmol to ≤ 10 mmol per 100 g of polymer and wherein the (meth)acrylate copolymer is produced using vinylic comonomers comprising substituents with polyoxyalkylene units (-CH₂-CH(R¹)-O-)ₘ, R¹ denoting H or alkyl and m having a value of ≥ 4 to ≤ 60.

7. The method according to any of claims 1 to 6, wherein in step I) the acid group content of the (meth)acrylate copolymer is ≥ 0.1 mmol to ≤ 10 mmol per 100 g of polymer and wherein the (meth)acrylate copolymer is produced using vinylic comonomers comprising substituents with amino groups -NR²R³, wherein R² and R³ denote, independently of each other, H, C₁ to C₃₀ alkyl or C₇ to C₃₇ alkylaryl.

8. The method according to any of claims 1 to 7, wherein an emulsifier selected from the group consisting of cationic, anionic and/or nonionic emulsifiers is added in one or more of steps I), II), III) and IV).

9. The method according to any of claims 1 to 8, wherein step IV) is performed using a static mixer.

10. The method according to any of claims 1 to 9, wherein step III) is performed using a nozzle with an, in radial direction, interior inner channel through which the water flows and a plurality of, in radial direction, outer channels through which the at least partially neutralized (meth)acrylate polymer and/or (meth)acrylate copolymer flows.

11. The method according to any of claims 1 to 10, wherein in the dispersion of step IV) the size of the particles is measured and the amount of neutralizing agent added in step II) is determined as a function of the particle size.

12. The method according to any of claims 1 to 11, wherein the viscosity of the dispersion of step IV) is measured and the amount of neutralizing agent added in step II) is determined as a function of the particle size.

## Patentansprüche

1. Verfahren zur Herstellung einer wässrigen Poly(meth)acrylatharz-Dispersion, das folgende Schritte umfasst:
I) Bereitstellen eines (Meth)acrylat-Polymers und/oder eines (Meth)acrylat-Copolymers mit einem Säuregruppengehalt von ≥ 0,1 mmol bis ≤ 200 mmol pro 100 g Polymer bei einer Temperatur von ≥ 50°C bis ≤ 170°C;
II) Zugeben eines Neutralisationsmittels zu dem (Meth)acrylat-Polymer und/oder (Meth)acrylat-Copolymer zum Erhalt eines mindestens teilweise neutralisierten (Meth)acrylat-Polymers und/oder (Meth)acrylat-Copolymers;
III) Zugeben von Wasser zu dem mindestens teilweise neutralisierten (Meth)acrylat-Polymer und/oder (Meth)acrylat-Copolymer zum Erhalt einer Zusammensetzung, die das mindestens teilweise neutralisierte (Meth)acrylatPolymer und/oder (Meth)acrylat-Copolymer und Wasser umfasst;
IV) Mischen der Zusammensetzung aus Schritt III) zum Erhalt einer Dispersion von Teilchen des mindestens teilweise neutralisierten (Meth)-acrylat-Polymers und/oder (Meth)acrylat-Copolymers in Wasser;
**dadurch gekennzeichnet, dass**
zumindest Schritt III) als kontinuierlicher Schritt gefahren wird.

2. Verfahren nach Anspruch 1, bei dem die Schritte I), II), III) und IV) als kontinuierliche Schritte gefahren werden.

3. Verfahren nach Anspruch 1 oder Anspruch 2, bei dem man in Schritt II) das (Meth)acrylat-Polymer und/oder (Meth)acrylat-Copolymer bis zu einem Grad von ≥ 30% bis ≤ 130% neutralisiert.

4. Verfahren nach einem der Ansprüche 1 bis 3, bei dem das Neutralisationsmittel in Schritt II) mindestens ein Amin umfasst.

5. Verfahren nach einem der Ansprüche 1 bis 4, bei dem man ein (Meth)acrylat-Copolymer verwendet, bei dem es sich um ein aus mindestens einem Alkylmethacrylat, mindestens einem Hydroxyalkyl(meth)-acrylat, mindestens einem Alkylacrylat und mindestens einer (Meth)acrylsäure und gegebenenfalls Styrol erhältliches Copolymer handelt.

6. Verfahren nach einem der Ansprüche 1 bis 5, bei dem in Schritt I) der Säuregruppengehalt des (Meth)acrylat-Copolymers ≥ 0,1 mmol bis ≤ 10 mmol pro 100 g Polymer beträgt und bei dem das (Meth)-acrylat-Copolymer unter Verwendung von vinylischen Comonomeren mit Substituenten mit Polyoxyalkylen-Einheiten (-CH₂-CH(R¹)-O-)ₘ hergestellt wird, wobei R¹ für H oder Alkyl steht und m einen Wert von ≥ 4 bis ≤ 60 aufweist.

7. Verfahren nach einem der Ansprüche 1 bis 6, bei dem in Schritt I) der Säuregruppengehalt des (Meth)acrylat-Copolymers ≥ 0,1 mmol bis ≤ 10 mmol pro 100 g Polymer beträgt und bei dem das (Meth)-acrylat-Copolymer unter Verwendung von vinylischen Comonomeren mit Substituenten mit Aminogruppen -NR²R³ hergestellt wird, wobei R² und R³ unabhängig voneinander für H, C₁-C₃₀-Alkyl oder C₇-C₃₇-Alkylaryl stehen.

8. Verfahren nach einem der Ansprüche 1 bis 7, bei dem man in einem oder mehreren der Schritte I), II), III) und IV) einen aus der Gruppe bestehend aus kationischen, anionischen und/oder nichtionischen Emulgatoren ausgewählten Emulgator zugibt.

9. Verfahren nach einem der Ansprüche 1 bis 8, bei dem man Schritt IV) unter Verwendung eines statischen Mischers durchführt.

10. Verfahren nach einem der Ansprüche 1 bis 9, bei dem man Schritt III) unter Verwendung einer Düse durchführt, die in Radialrichtung einen Innenkanal, durch den das Wasser fließt, und in Radialrichtung mehrere Außenkanäle, durch die das mindestens teilweise neutralisierte (Meth)acrylatPolymer und/oder (Meth)acrylat-Copolymer fließt, aufweist.

11. Verfahren nach einem der Ansprüche 1 bis 10, bei dem man in der Dispersion aus Schritt IV) die Größe der Teilchen misst und die in Schritt II) zugegebene Neutralisationsmittelmenge als Funktion der Teilchengröße bestimmt.

12. Verfahren nach einem der Ansprüche 1 bis 11, bei dem man die Viskosität der Dispersion aus Schritt IV) misst und die in Schritt II) zugegebene Neutralisationsmittelmenge als Funktion der Viskosität bestimmt.

## Revendications

1. Procédé pour la production d'une dispersion aqueuse de résine de poly(méth)acrylate, comprenant les étapes consistant à :
I) mettre à disposition un polymère de (méth)acrylate et/ou un copolymère de (méth)acrylate présentant une teneur en groupes acides de ≥ 0,1 mmole à ≤ 200 mmoles par 100 g de polymère à une température de ≥ 50°C à ≤ 170°C ;
II) ajouter un agent de neutralisation au polymère de (méth)acrylate et/ou au copolymère de (méth)acrylate de manière à obtenir un polymère de (méth)acrylate et/ou un copolymère de (méth)acrylate au moins partiellement neutralisé(s) ;
III) ajouter de l'eau audit polymère de (méth)acrylate et/ou audit copolymère de (méth)acrylate au moins partiellement neutralisé(s) pour obtenir une composition comprenant le polymère de (méth)acrylate et/ou le copolymère de (méth)acrylate au moins partiellement neutralisé(s) et de l'eau ;
IV) mélanger la composition de l'étape III) pour obtenir une dispersion de particules du polymère de (méth)acrylate et/ou du copolymère de (méth)acrylate au moins partiellement neutralisé(s) dans l'eau ;
**caractérisé en ce qu'**au moins l'étape III) est réalisée sous forme d'étape continue.

2. Procédé selon la revendication 1, dans lequel les étapes I), II), III) et IV) sont réalisées sous forme d'étapes continues.

3. Procédé selon la revendication 1 ou la revendication 2, dans lequel, dans l'étape II), le polymère de (méth)acrylate et/ou le copolymère de (méth)acrylate est/sont neutralisé(s) à un degré de ≥ 30% à ≤ 130%.

4. Procédé selon l'une quelconque des revendications 1 à 3, dans lequel l'agent de neutralisation dans l'étape II) comprend au moins une amine.

5. Procédé selon l'une quelconque des revendications 1 à 4, dans lequel on utilise un copolymère de (méth)acrylate qui est un copolymère pouvant être obtenu à partir d'au moins un méthacrylate d'alkyle, d'au moins un (méth)acrylate d'hydroxyalkyle, d'au moins un acrylate d'alkyle et d'au moins un acide (méth)acrylique et éventuellement de styrène.

6. Procédé selon l'une quelconque des revendications 1 à 5, dans lequel, dans l'étape I), la teneur en groupes acides du copolymère de (méth)acrylate est de ≥ 0,1 mmole à ≤ 10 mmoles par 100 g de polymère et dans lequel le copolymère de (méth)acrylate est produit à l'aide de comonomères de vinyle comprenant des substituants présentant des unités de polyoxyalkylène (-CH₂-CH(R¹)-O-)ₘ, R¹ représentant H ou alkyle et m présentant une valeur de ≥ 4 à ≤ 60.

7. Procédé selon l'une quelconque des revendications 1 à 6, dans lequel, dans l'étape I), la teneur en groupes acides du copolymère de (méth)acrylate est de ≥ 0,1 mmole à ≤ 10 mmoles par 100 g de polymère et dans lequel le copolymère de (méth)acrylate est produit à l'aide de comonomères de vinyle comprenant des substituants présentant des groupes amino -NR²R³, R² et R³ représentant, indépendamment l'un de l'autre, H, C₁-C₃₀-alkyle ou C₇-C₃₇-alkylaryle.

8. Procédé selon l'une quelconque des revendications 1 à 7, dans lequel un émulsifiant choisi dans le groupe constitué par les émulsifiants cationiques, anioniques et/ou non ioniques est ajouté dans une ou plusieurs des étapes I), II), III) et IV).

9. Procédé selon l'une quelconque des revendications 1 à 8, dans lequel l'étape IV) est réalisée à l'aide d'un mélangeur statique.

10. Procédé selon l'une quelconque des revendications 1 à 9, dans lequel l'étape III) est réalisée à l'aide d'une buse présentant, dans la direction radiale, un canal interne au travers duquel l'eau s'écoule et une pluralité de canaux externes, dans la direction radiale, au travers desquels le polymère de (méth)acrylate et/ou le copolymère de (méth)acrylate au moins partiellement neutralisé(s) s'écoule(nt).

11. Procédé selon l'une quelconque des revendications 1 à 10, dans lequel, dans la dispersion de l'étape IV), la grosseur des particules est mesurée et la quantité d'agent de neutralisation ajoutée dans l'étape II) est déterminée en fonction de la grosseur des particules.

12. Procédé selon l'une quelconque des revendications 1 à 11, dans lequel la viscosité de la dispersion de l'étape IV) est mesurée et la quantité d'agent de neutralisation ajoutée dans l'étape II) est déterminée en fonction de la viscosité.
